# EUROPÄISCHE PATENTANMELDUNG

(11) **EP 2 292 922 A2**
(43) Veröffentlichungstag der Anmeldung: **09.03.2011**
(21) Anmeldenummer: 10006568.9
(22) Anmeldetag: 24.06.2010
(51) Int. Cl.: F02P 23/04, F02B 19/04, H01S 3/034, H01T 13/54

(54) **Laserzündvorrichtung für Brennkraftmaschine**

(30) Priorität: 23.07.2009 AT 11592009
(71) Anmelder: GE Jenbacher GmbH & Co OHG, 6200 Jenbach (AT)
(72) Erfinder: Gruber, Friedrich, 6283 Hippach (AT); Kraus, Markus, 6200 Wiesing (AT); Weiler, Markus, 9911 Assling (AT)
(74) Vertreter: Gangl, Markus

(57) **Zusammenfassung**

Vorrichtung (1) zur Zündung eines Treibstoff-Luft-Gemischs im Brennraum (4) eines Zylinders (3) einer Brennkraftmaschine (2), umfassend
a. eine erste Vorkammer (20) und eine zweite Vorkammer (30),
b. eine Wandung (21), die zwischen den beiden Vorkammern (20, 30) angeordnet ist,
c. zumindest eine Übertrittsöffnung (22) in der Wandung (21), sodass die erste und die zweite Vorkammer (20, 21) in Fluidkommunikation stehen
d. zumindest eine Austrittsöffnung (32), sodass die zweite Vorkammer (30) in Fluidkommunikation mit dem Brennraum (4) steht,
e. einen Treibstoffeinlass (18), der in die zweite Vorkammer (30) mündet sowie
f. eine Laserlichterzeugungsvorrichtung (14) mit einer Einkoppeloptik (15), welche in die erste Vorkammer (20) mündet und mit der Laserlicht (16) in die erste Vorkammer (20) einbringbar ist.

## Beschreibung

Die Erfindung betrifft eine Vorrichtung zur Zündung eines Treibstoff-Luft-Gemischs im Brennraum eines Zylinders einer Brennkraftmaschine umfassend eine Vorkammer und eine Laserlichterzeugungsvorrichtung. Die Erfindung betrifft weiters ein Verfahren zur Zündung eines Treibstoff-Luft-Gemischs im Brennraum eines Zylinders einer Brennkraftmaschine. Schließlich betrifft die Erfindung eine Brennkraftmaschine mit einer solchen Vorrichtung.

Herkömmliche Funkenzündeinrichtungen, bei denen ein Treibstoff-Luft-Gemisch mit einer Zündkerze oder dergleichen gezündet wird, haben nur eine beschränkte Lebensdauer aufgrund von Elektrodenverschleiß durch Funkenerosion.

Eine Verbesserung der oben genannten Situation kann mit Zündeinrichtungen mit Laserlichterzeugungsvorrichtungen erzielt werden. Diese sind zwar kostenintensiver, haben allerdings den Vorteil einer praktischen Verschleißfreiheit.

Der Einsatz von Zündeinrichtungen mit Laserlichterzeugungsvorrichtung ist allerdings ebenfalls mit Problemen verbunden. Ein Hauptproblem besteht in der Verschmutzung der Oberfläche der sogenannten Einkoppeloptik (bzw. des sogenannten Brennraumfensters), mit dem das Laserlicht in den Brennraum eingekoppelt wird. Vor allem Verbrennungsrückstände durch unvollständige Verbrennung des Treibstoff-Luftgemischs, Ruß oder Verunreinigungen im Treibstoff führen zur Verschmutzung der Einkoppeloptik. Diese Verschmutzung hat zur Konsequenz, dass zur Aufrechterhaltung der Zündung eine höhere Laserlichtleistung benötigt wird, da ein Teil des Laserlichts von der Verschmutzung absorbiert bzw. gestreut wird.

Aufgabe der vorliegenden Erfindung ist es daher, hier Abhilfe zu schaffen und die Verschmutzung der Oberfläche des Brennraumfensters bzw. der Einkoppeloptik so gering wie möglich zu halten.

Diese Aufgabe wird gelöst durch eine Vorrichtung zur Zündung eines Treibstoff-Luft-Gemischs im Brennraum eines Zylinders einer Brennkraftmaschine, umfassend
a. eine erste Vorkammer und eine zweite Vorkammer,
b. eine Wandung, die zwischen den beiden Vorkammern angeordnet ist,
c. zumindest eine Übertrittsöffnung in der Wandung, sodass die erste und die zweite Vorkammer in Fluidkommunikation stehen,
d. zumindest eine Austrittsöffnung, sodass die zweite Vorkammer in Fluidkommunikation mit dem Brennraum steht,
e. einen Treibstoffeinlass, der in die zweite Vorkammer mündet sowie
f. eine Laserlichterzeugungsvorrichtung mit einer Einkoppeloptik, welche in die erste Vorkammer mündet und mit dem Laserlicht in die erste Vorkammer einbringbar ist.

Eine Grundidee der Erfindung liegt darin, möglichst wenig verbranntes Treibstoff-Luft-Gemisch an die Einkoppeloptik gelangen zu lassen. Die spezielle Anordnung mit zwei Vorkammern, wobei die endgültige Zündung des Treibstoff-Luft-Gemischs, das den Kolben im Zylinder antreibt, im Brennraum, die Erstzündung mit Laserlicht allerdings in der ersten Vorkammer erfolgt, wobei der Treibstoffeinlass in die zweite Vorkammer mündet, führt zu einer weitestgehenden Abschottung der Laserlichterzeugungsvorrichtung vom Brennraum. Die erste Vorkammer sollte hierfür mit dem Brennraum lediglich über die zweite Vorkammer in Fluidverbindung stehen, nicht aber in direkter Fluidverbindung. Das bedeutet, dass Fluid aus dem Brennraum nur dann in die erste Vorkammer gelangen könnte, wenn dieses Fluid zuerst die zweite Vorkammer passiert hat.

Eine vorteilhafte Ausgestaltung sieht vor, dass die erste Vorkammer einen Zündraum und einen Verbindungskanal aufweist, wobei der Verbindungskanal zwischen Zündraum und Einkoppeloptik angeordnet ist. Besonders bevorzugt kann bei dieser Ausführung weiters vorgesehen sein, dass die Laserlichterzeugungsvorrichtung und der Verbindungskanal so angeordnet sind, dass der Brennpunkt des Laserlichts im Betriebszustand im Zündraum liegt. In dieser Ausgestaltung ist die Abschottung der Einkoppeloptik vom Brennraum durch den Verbindungskanal noch besser. Die Rückströmung von verbranntem Gas ist dann besonders gering, wenn der Verbindungskanal einen Querschnitt aufweist, der mit steigender Entfernung von der Einkoppeloptik abnimmt.

Die Erfindung verhindert zwar nicht gänzlich das Rückströmen von verbranntem Gas an die Einkoppeloptik, dennoch gewährleistet die spezielle Anordnung von erster und zweiter Vorkammer und Laserlicherzeugungsvorrichtung, dass vor der Einkoppeloptik ein geringer Fluidstrom herrscht, bzw. ein sehr geringer Rückstrom an verbranntem Treibstoff-Luft-Gemisch.

In einer vorteilhaften Ausführungsvariante kann vorgesehen sein, dass die zweite Vorkammer einen Hauptraum und einen Kanal aufweist, der in den Hauptraum mündet. Dabei kann ein annähernd kugelförmiger oder ellipsoider Hauptraum vorgesehen sein.

In einer vorteilhaften Ausführungsvariante kann weiters vorgesehen sein, dass die wenigstens eine Austrittsöffnung an einem Ende des Kanals angeordnet ist.

Weiters kann vorgesehen sein, dass der Kanal im Einbauzustand in einem von 0° verschiedenen Winkel zur Hauptbewegungsrichtung des Kolbens im Zylinder angeordnet ist. Der Winkel kann z.B. zwischen 15° und 75°, vorzugsweise zwischen 30° und 60°, betragen. Der Kanal bewirkt eine gute Verwirbelung in der zweiten Vorkammer. Die Ausführungsvarianten mit einem schräg angeordnetem Kanal weisen den Vorteil auf, dass es zu einer spiralförmigen Verwirbelung kommt.

Weiters kann der Kanal wenigstens abschnittsweise zylinderförmig ausgebildet sein. In einer alternativen Ausführungsvariante kann der Kanal wenigstens abschnittsweise konisch aufweitend ausgebildet sein, beispielsweise in der Form eines Kegels oder Kegelstumpfes. Die Aufweitung erfolgt bevorzugt hin zur zweiten Vorkammer zum besseren Zurückdrängen des verbrannten Restgases in Richtung erste Vorkammer in der Kompressionsphase.

Eine vorteilhafte Variante sieht einen annähernd kugelförmigen oder ellipsoiden Zündraum vor.

Das Volumenverhältnis von Hauptraum zu Zündraum ist bevorzugt > 10 : 1.

In einer vorteilhaften Ausgestaltung ist vorgesehen, dass die erste Vorkammer zumindest zwei, vorzugsweise vier, Übertrittsöffnungen aufweist. Bei vier Übertrittsöffnungen können diese entlang eines gedachten Kreises angeordnet sein, wobei jede Übertrittsöffnung um 90° um den Mittelpunkt des Kreises versetzt ist.

Weiters kann vorgesehen sein, dass die zweite Vorkammer wenigstens zwei, vorzugsweise vier, Austrittsöffnungen aufweist. Auch hier kann vorgesehen sein, dass die vier Austrittsöffnungen entlang eines Kreises angeordnet sind, wobei jede Austrittsöffnung um 90° um den Mittelpunkt des Kreises versetzt ist.

Die beschriebene Anordnung aus Übertrittsöffnungen und Austrittsöffnungen gewährleistet einen ausreichenden Fluidfluss bei trotzdem geringer Rückströmung in Richtung Einkoppeloptik.

In einer bevorzugten Ausführungsvariante kann vorgesehen sein, dass die erste Vorkammer und/oder die zweite Vorkammer bereichsweise annähernd kugelförmig ausgebildet sind.

Die eingangs gestellte Aufgabe wird weiters gelöst, durch ein Verfahren zur Zündung eines Treibstoff-Luft-Gemischs im Brennraum eines Zylinders einer Brennkraftmaschine mit einer Vorrichtung der vorgenannten Art, wobei Treibstoff in die zweite Vorkammer eingelassen wird, der über die Übertrittsöffnungen in die erste Vorkammer eintritt und mit der Laserlichterzeugungsvorrichtung gezündet wird, wobei das gezündete Treibstoff-Luft-Gemisch über die Übertrittsöffnungen in die zweite Vorkammer übertritt und dort Treibstoff-Luft-Gemisch entzündet, welches dann die Zündflammen erzeugt, die über die Austrittsöffnungen in den Brennraum übertreten und dort ein Treibstoff-Luft-Gemisch zünden.

Weiters betrifft die Erfindung eine Brennkraftmaschine mit einer Vorrichtung der vorgenannten Art. Besonders bevorzugt handelt es sich dabei um eine stationäre, Brennkraftmaschine, insbesondere um einen Gasmotor, d.h. um einen Verbrennungsmotor, der einen gasförmigen Treibstoff wie Methan verbrennt. Beispielsweise kann es sich um einen gemischaufgeladenen Gasmotor handeln. Bei gemischaufgeladenen Gasmotoren wird als Fluid nicht reine Luft, sondern ein Treibstoff-Luft-Gemisch in einer Verdichtungseinrichtung verdichtet. Es kann aber auch ein luftaufgeladener Gasmotor sein, bei dem Luft verdichtet und in den Brennraum eingelassen wird und die Treibstoffzufuhr separat z.B. über Einlassventile oder eine Port-injektion erfolgt. Beispielsweise kann es sich in einer Ausführungsvariante um einen ottomotorischen, d.h. fremdgezündeten Verbrennungsmotor handeln. Stationäre Brennkraftmaschinen werden oft zum Antrieb eines Generators eingesetzt, der elektrischen Strom bereitstellt. Solche stationären Brennkraftmaschinen sind daher meist auf lange ununterbrochene Laufzeiten ausgelegt, sodass es wichtig ist, dass die Zündvorrichtung eine lange Lebensdauer mit möglichst konstanten Eigenschaften aufweisen muss.

Weitere Vorteile und Details der Erfindung ergeben sich anhand der nachfolgenden Figuren. Es zeigt bzw. zeigen die
- Fig. 1a: einen Querschnitt einer erfindungsgemäßen Vorrichtung im Einbauzustand,
- Fig. 1b: die Detailansicht H der Fig. 1a sowie die
- Fig. 1c und 1d: zwei leichte Abwandlungen der Vorrichtungen gemäß Fig. 1a und 1b,
- Fig. 2 bis 4: einzelne Verfahrensschritte anhand der Vorrichtung der Fig. 1.

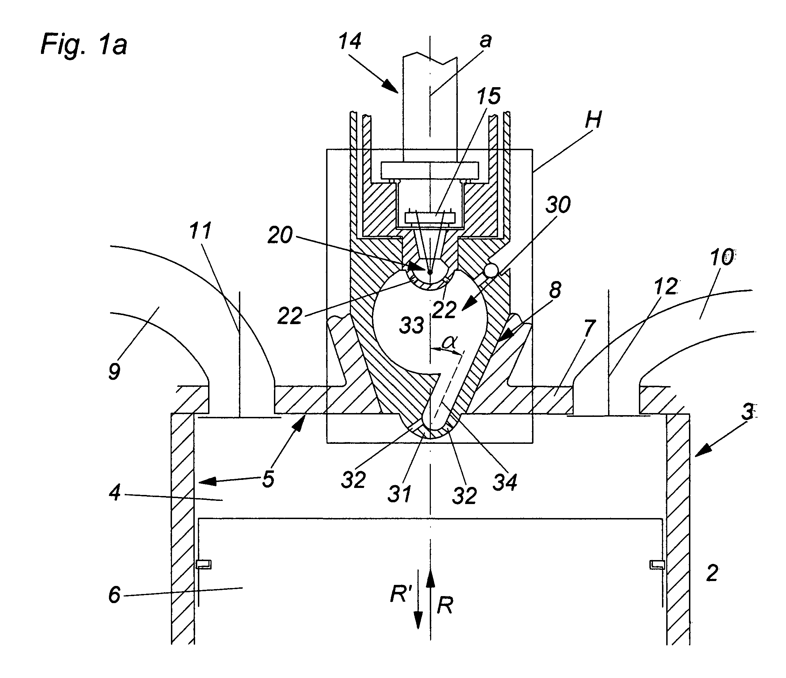

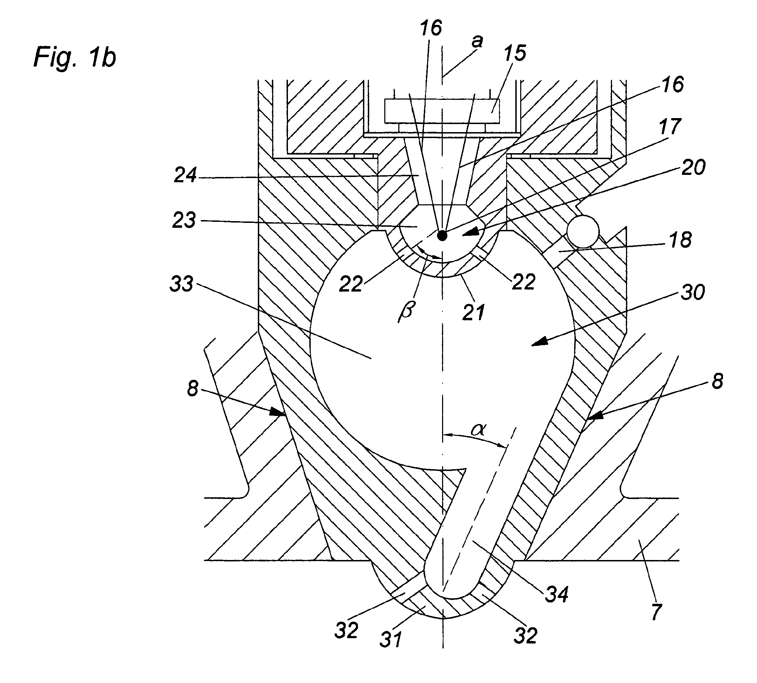

In den Fig. 1a und 1b ist ein Querschnitt durch eine Vorrichtung 1 gemäß der Erfindung im eingebauten Zustand in einer Brennkraftmaschine 2 (jeweils teilweise weggebrochen) gezeigt. Repräsentativ für die Brennkraftmaschine 2 ist lediglich ein Zylinder 3 gezeigt, obwohl solche Brennkraftmaschinen 2 regelmäßig mehr als vier, z.B. bis zu 24 Zylinder aufweisen. Im Zylinder 3 befindet sich ein Brennraum 4 der durch die Zylinderwandungen 5 und einem beweglich gelagerten Kolben 6 begrenzt wird. Die Funktionsweise einer solchen Hubkolbenanordnung ist hinlänglich bekannt uns braucht an dieser Stelle nicht mehr näher beschrieben werden, da der Fachmann solche Einrichtungen kennt. Am Zylinderkopf 7 des Zylinders 3 ist eine Aufnahme 8 für die Vorrichtung 1 vorgesehen. Die Vorrichtung 1 kann in die Aufnahme 8 eingespannt oder mittels anderer allerdings nicht gezeigter Befestigungsvorrichtungen befestigt sein. Theoretisch können Vorrichtung 1 und Zylinder 3 auch dauerhaft miteinander verbunden sein bzw. einstückig ausgebildet sein.

Der Zylinder 3 ist zusätzlich mit einem Einlasstrakt 9 und einem Auslasstrakt 10 über Einlassventil 11 und Auslassventil 12 verbunden. Über den Einlasstrakt 9 und das Einlassventil 11 wird der Brennraum 4 durch eine Treibstoffquelle mit Treibstoff und Luft aus dem Ansaugtrakt versorgt. Über das Auslassventil 12 kann verbranntes Treibstoff-Luft-Gemisch (Abgas) in den Abgastrakt 10 überführt werden.

Die Vorrichtung 1 zur Zündung des Treibstoff-Luft-Gemischs umfasst eine erste Vorkammer 20 mit einer Wandung 21, in der Übertrittsöffnungen 22 eingebracht sind (Fig. 1b). Erkennbar sind zwei solcher Übertrittsöffnungen 22, die einander um 180° versetzt um einen gedachten Kreis um die Achse a gegenüberliegen. Die beiden weiteren Übertrittsöffnungen 22, die zu den gezeigten Übertrittsöffnungen 22 um 90° versetzt sind, sind in der Fig. 1a und der Fig. 1b nicht erkennbar, da sie vor und hinter der Schnittebene liegen. Weiters ist eine Laserlichterzeugungsvorrichtung 14 - wie an sich bekannt - vorgesehen. Diese weist eine Einkoppeloptik 15 in der Form eines Brennraumfensters auf, über die Laserlicht 16 im Brennpunkt 17 fokussiert wird. Die erste Vorkammer 20 ist zusätzlich unterteilt in einen Zündraum 23, in dem der Brennpunkt 17 des Laserlichts 16 aus der Laserlichterzeugungsvorrichtung 14 fokussiert wird. Zwischen Zündraum 23 und Brennraumfenster 15 ist ein Verbindungskanal 24 angeordnet, dessen Querschnitt mit zunehmender Entfernung von dem Brennraumfenster 15 hin zum Brennpunkt 17 abnimmt. Die Übertrittsöffnungen 22 sind im Vergleich zum Brennpunkt 17 und dem Verbindungskanal 24 auf der dem Verbindungskanal 24 gegenüberliegenden Seite angeordnet. Die beiden Übertrittsöffnungen 22 sind dabei schräg zur Hauptachse a der Vorrichtung, d.h. in einem Winkel β angeordnet. Der Winkel β beträgt hier etwa 45°.

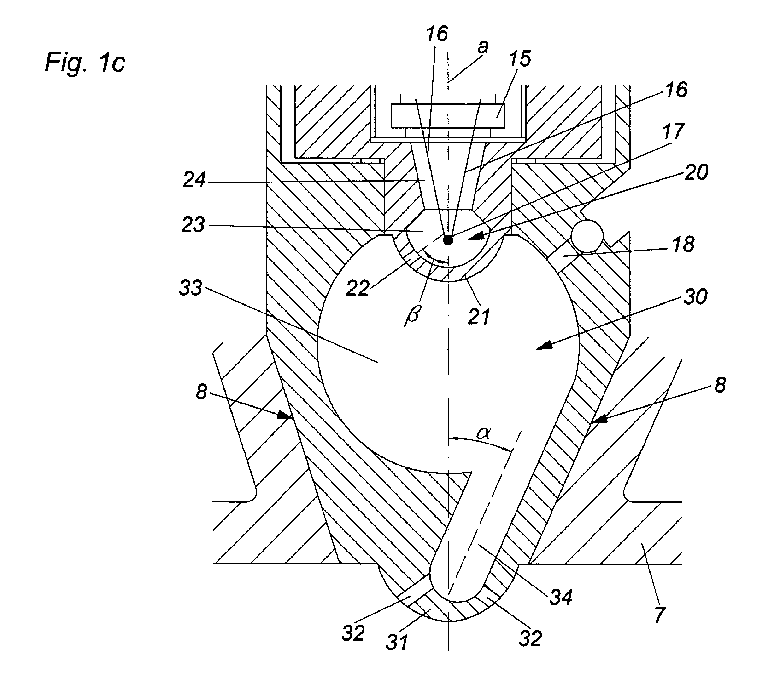

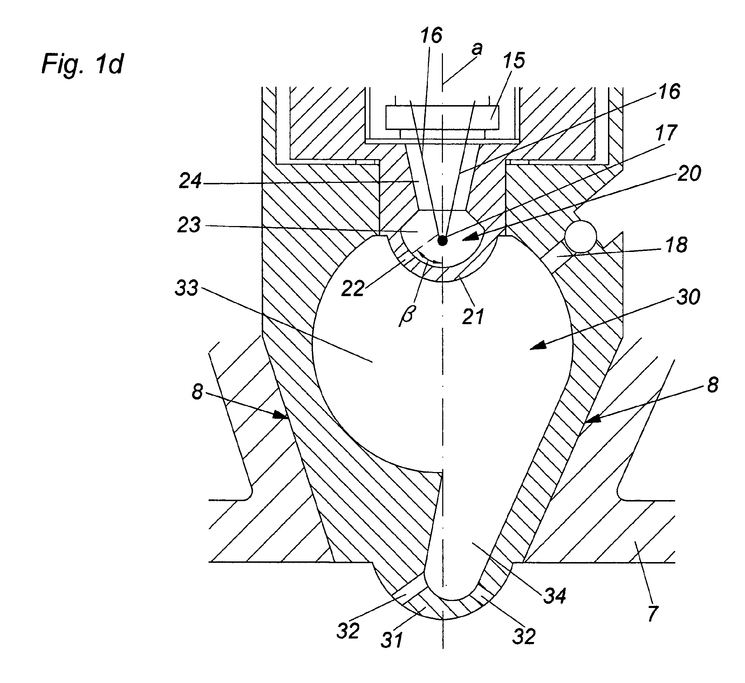

Die erste Vorkammer 20 wird von einer zweiten Vorkammer 30 bereichsweise umgeben. Dabei reicht die erste Vorkammer 20 teilweise in die zweite Vorkammer 30 hinein. Die erste Vorkammer 20 ist über die Wandung 21 von der zweiten Vorkammer 30 abgetrennt. Die Übertrittsöffnungen 22 ermöglichen eine Fluidkommunikation zwischen erster 20 und zweiter Vorkammer 30. Die zweite Vorkammer 30 weist einen Hauptraum 33 und einen Kanal 34 auf. Der Kanal 34 verbindet den Hauptraum 33 und den Brennraum 4. Die Austrittsöffnungen 32 sind dabei auf der dem Hauptraum 33 abgewandten Seite des Kanals 34 angeordnet. Erkennbar sind zwei solcher Austrittsöffnungen 32, die einander um 180° versetzt um einen gedachten Kreis um die Achse a gegenüberliegen. Die beiden weiteren Austrittsöffnungen 32, die zu den gezeigten Austrittsöffnungen 32 um 90° versetzt sind, sind in der Fig. 1 nicht erkennbar, da sie vor und hinter der Schnittebene liegen. Der Kanal 34 ist im Vergleich zur Hauptbewegungsrichtung R des Kolbens 6 im Zylinder 3 (angedeutet durch den Pfeil) um den Winkel α von etwa 30° geneigt.

Hauptraum 33 und Zündraum 23 sind beide im Wesentlichen etwa kugelförmig bzw. ellipsoid ausgebildet. Das Verhältnis der Volumina von erster Vorkammer 20 zu zweiter Vorkammer 30 liegt bei etwa 1 : 50. Die zweite Vorkammer 30 wird über den Treibstoffeinlass 18 mit einem Treibstoff versorgt. Bevorzugt wird reiner Treibstoff, vorzugsweise gasförmiger Treibstoff - also Treibgas - in die zweite Vorkammer 30 über den Treibstoffeinlass 18 eingelassen. Sauerstoff strömt über die Austrittsöffnungen 32 aus dem Brennraum 4 in die zweite Vorkammer 30. Im Brennraum 4 wird ein Treibstoff-Luft-Gemisch, vorzugsweise ein Treibgas-Luft-Gemisch über die Einlassventile 11 eingelassen. Das Verhältnis von Luft zu Treibstoff λ ist dabei > 1, d.h., es handelt sich um ein mageres Gemisch mit Sauerstoffüberschuss. Im Bereich der zweiten Vorkammer 30 erfolgt durch den Treibstoffeinlass 18 eine Auffettung des Gemischs auf vorzugsweise λ ≤ 1. Dieses Gemisch strömt in die erste Vorkammer 20 über die Übertrittsöffnungen 22.

Die Fig. 1c zeigt eine leichte Abwandlung der Vorrichtung 1 gemäß Fig. 1a und 1b. Im Unterschied dazu ist nämlich nur eine Übertrittsöffnung 22 vorgesehen. Diese ist strömungstechnisch so angeordnet, dass sie auf der strömungsseitig abgewandten Seite ist, d.h. "lee-seitig" angeordnet ist. In der Kompressionsphase strömt dabei Luft aus dem Kanal 34 hin zur Wandung 21 und erst mit einiger Verzögerung über die Übertrittsöffnung 22 in die erste Vorkammer 20. Diese Anordnung, dass die eine (oder mehrere) Übertrittsöffnung(en) 22 auf der der Strömungsrichtung abgewandten Seite angeordnet ist (sind), hat den Vorteil, dass das frische Gas (Treibstoff-Luft-Gemisch) nur langsam das Restgas verdrängen kann.

Eine weitere Variante ist in der Fig. 1d gezeigt, die ebenfalls nur die Übertrittsöffnungen 22 auf der strömungsseitig abgewandten Seite aufweisen. Darüber hinaus ist der Kanal 34 konusförmig, d.h. im Wesentlichen wie ein Kegelstumpf ausgebildet. Dadurch wird ebenfalls die Verwirbelung innerhalb der zweiten Vorkammer 30 bzw. dem Hauptraum 33 gesteuert und in weiterer Folge die Strömung in die erste Vorkammer beeinflusst.

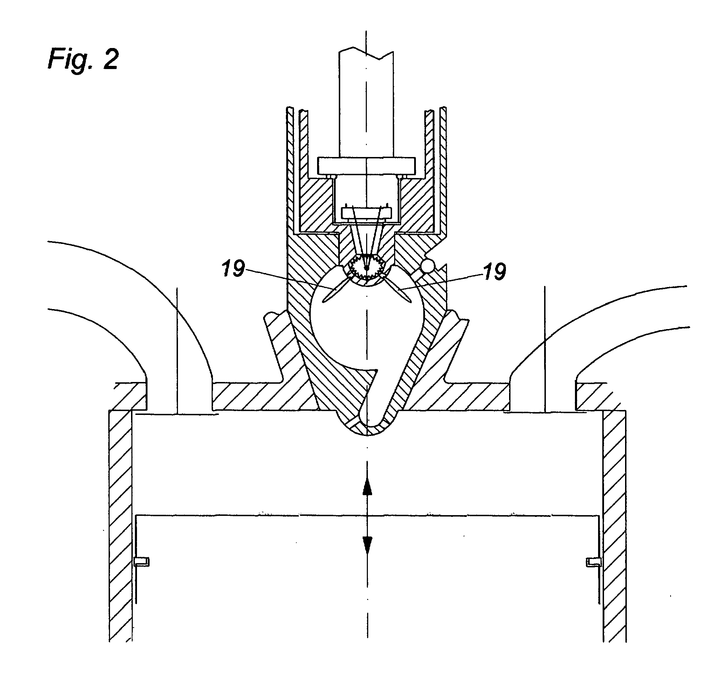

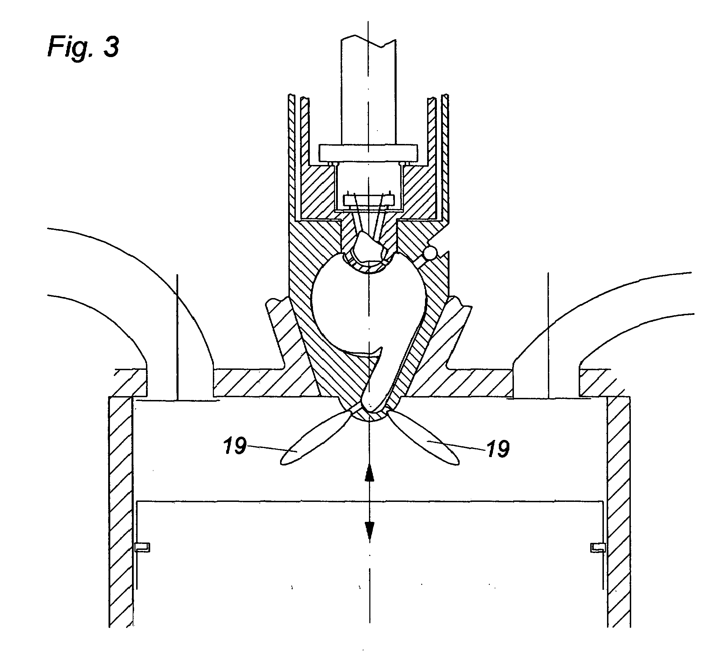

Im Betriebszustand (Fig. 2) zündet die Laserlichterzeugungsvorrichtung 14, die Laserlicht 16 mit einer Intensität bereitstellt, sodass ein Treibstoff-Luft-Gemisch gezündet werden kann, das Treibstoff-Luft-Gemisch in der ersten Vorkammer 20. Die Verbrennungsfackeln 19 strömen in die zweite Vorkammer 30 über die Übertrittsöffnungen 22 und zünden dort das vorhandene Treibstoff-Luft-Gemisch. Über die Austrittsöffnungen 32 treten die Verbrennungsfackeln 19 aus der zweiten Vorkammer 30 in den Brennraum 4 über (Fig. 3), um dort nun die endgültige Zündung des Treibstoff-Luft-Gemischs zu verursachen, die eine Volumensausdehnung bewirkt, sodass der Kolben 6 Hubarbeit verrichtet.

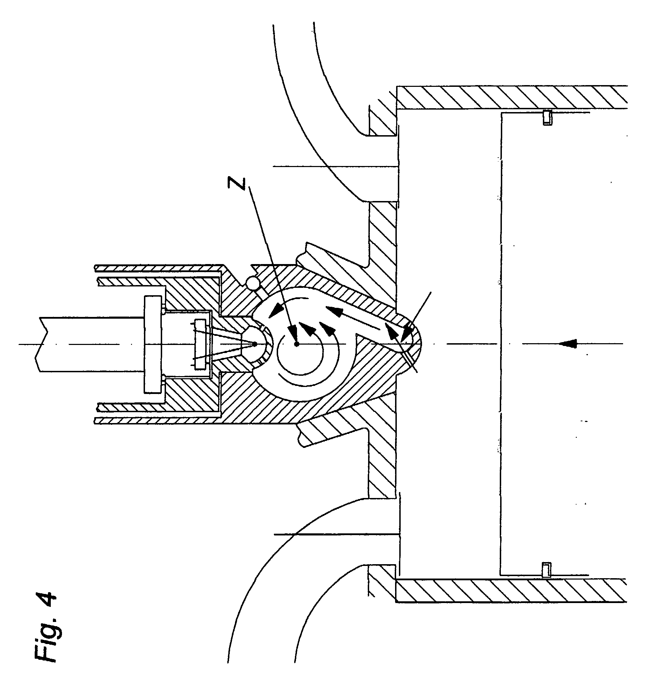

In der Fig. 4 ist nunmehr der Zustand gezeigt, wenn über den Einlasstrakt 9 und das Einlassventil 11 Luft bzw. ein Treibstoff-Luft-Gemisch in den Brennraum 4 eingelassen wird und der Kolben 6 dieses Gemisch verdichtet und in die zweite Vorkammer 30 über die Austrittsöffnungen 32 drückt, dass es zu einer Verwirbelung in der zweiten Vorkammer 30 kommt. Über den Treibstoffeinlass 18 wird reiner Treibstoff in die zweite Vorkammer 30 eingelassen und durch die Verwirbelung über die Übertrittsöffnungen 22 in die erste Vorkammer 20 mitüberführt.

Wie aus den Figuren ersichtlich ist, wird die Begrenzung der ersten Vorkammer 20 bzw. des Zündraums 23 nach hinten zum Brennraumfenster 15 über den Verbindungskanal 24 vom Brennraum 4 abgeschirmt. Die schräge Anordnung des Kanals 34 und die kugelförmigen Ausbildungen der einzelnen Kammern 20, 30 bewirken eine gute Durchmischung in der ersten und zweiten Vorkammer 20, 30. Der verengende Verbindungskanal 34 zum Brennraumfenster 15 minimiert, ein Zurückströmen und verhindert somit auch das Zurückströmen von Rußpartikeln oder teilweise unverbranntem Treibstoff, das sich somit nicht am Brennraumfenster 15 ablagern kann und keine Verschmutzung verursachen kann.

Die Entflammung des Gemisches in der ersten Vorkammer 20 erfolgt durch einen Plasmafunken, der durch die Fokussierung von Laserlichtstrahlung 16 in einer hofartigen Erweiterung (Zündraum 23) am unteren Ende der ersten Vorkammer 20 erzeugt wird. An dieser Stelle sind die Entflammungsbedingungen für den Plasmafunken günstig, wobei das aus der zweiten Vorkammer 30 durch die Übertrittsöffnungen (Bohrungen) 22 während der Kompressionsphase einströmende Treibstoff-Luft-Gemisch sowohl ein ideales Verbrennungsluftverhältnis aufweist als auch am Zündort ideale Strömungsverhältnisse vorliegen. Nach der Entflammung des Gemisches im Zündraum 23 treten relativ kleine Zündfackeln 19 in den Hauptraum 33 aus, die eine rasche und vollständige Entflammung des Gemisches in der zweiten Vorkamme 30 bewirken. Dies wiederum erzeugt sehr starke in den Brennraum 4 austretende Zündfackeln 19, die zu einem raschen und effizienten Durchbrennen des Brennraumes 4 führen. Die Erzeugung der nur wenige Nanosekunden (z.B. 1 - 8 nsec) andauernden Laserlichtstrahlung 16, die in den Plasmafunken fokussiert wird, erfolgt durch bereits bekannte Laserlichterzeugungsvorrichtungen 14, beispielsweise durch diodengepumpte NdYAG-Festkörperlaser. Die optische Grenzfläche zwischen der Laserzündeinrichtung 1 und dem Zündraum 23, in dem der Zündfunke erzeugt wird, bildet das Brennraumfenster 15 bzw. die Einkoppeloptik 15. Um zu vermeiden, dass die (brennraumseitige) Oberfläche der Einkoppeloptik 15 durch Verbrennungsrückstände beeinträchtigt wird, ist erfindungsgemäß vorgesehen, dass das Brennraumfenster 15 möglichst weitgehend von der Verbrennungszone abgeschirmt wird. Dies wird besonders effizient dadurch erreicht, dass zum Einen eine kanalartige Verengung (Verbindungskanal 24) zwischen dem Ort der Funkenerzeugung und dem Brennraumfenster 15 vorgesehen ist, und zum Anderen dadurch, dass der Zündraum 23 vom Hauptraum 33 weitgehend abgeschirmt und nur durch kleine Übertrittsbohrungen 22 mit dieser verbunden ist. Zur Erreichung des angestrebten Zieles der Reinhaltung des Brennraumfensters 15 ist es günstig, wenn die Geometrien der Vorkammern 20, 30 bestimmte Eigenschaften aufweisen: Die zweite Vorkammer 30 sollte bevorzugt so ausgeführt werden, dass durch das beim Kompressionsvorgang (während der Aufwärtsbewegung des Kolbens 6) vom Brennraum 4 in die Vorkammer 30 einströmende Treibstoff-Luft-Gemischs eine Drallströmung erzeugt wird, siehe Fig. 4. Die Drallachse Z steht senkrecht zur Zeichnungsebene. Dies wird in der Weise realisiert, dass die Austrittsöffnungen 32 in einen schräg nach oben laufenden Kanal 34 münden, sodass das aus dem Brennraum 4 überströmende Treibstoff-Luft-Gemisch eine Tangentialströmung in der Vorkammer 30 erzeugt, wodurch sich entsprechend der geometrischen Form der Vorkammer 30 die Drallströmung ausbildet. Diese Drallströmung sorgt für eine gute Durchmischung und Homogenisierung des Gasgemisches in der zweiten Vorkammer 30. Dieses Gemisch besteht aus den Komponenten: Treibstoff-Luft-Gemisch aus dem Brennraum 4, Restgas vom vorhergehenden Verbrennungszyklus und Vorkammergas, das während eines bestimmten Zeitfensters der Ladungswechselphase durch das Treibstoffeinlassventil 18 in die zweite Vorkammer 30 einströmt. Das Vorkammergas kann dabei aus dem Brenngas selbst, einem anderen brennbarem Gas oder aus einem Gemisch von einem oder mehreren Treibstoffen mit Luft und/oder mit Abgas bestehen. Der Funkenort ist von der zweiten Vorkammer 30 abgeschirmt und nur durch ein oder mehrere Übertrittsbohrungen 22 mit dieser verbunden. Durch diese Bohrungen 22 wird ereicht, dass der Entflammungsraum im Zündraum 23 von der relativ hohen Strömungsgeschwindigkeit in der zweite Vorkammer 30 abgeschirmt wird und eine Spülung des Verbindungskanals 24 zum Brennraumfenster 15 durch brennbares Treibstoff-Luft-Gemisch weitgehend vermieden wird. Nach erfolgreicher Entflammung des Treibstoff-Luft-Gemisches im Zündraum 23 bilden sich primäre Zündfackeln 19 aus, die das Gemisch in der zweiten Vorkammer 30 rasch und vollständig entflammen. Die Geometrie des Funkenraumes ist so ausgeführt, dass eine Vermischung von Haupt-Vorkammer-Gemisch und dem in der ersten Vorkammer 20 vorhandenen Restgas möglichst vermieden wird. Der Plasma-Zündfunke wird dabei in einer entsprechend optimierten hofartigen Erweiterung in der Nähe der Überströmbohrungen (zwischen erster Vorkammer und zweiter Vorkammer) gelegt. In Richtung Einkoppeloptik 15 ist die Konzentration des Restgases deutlich höher und am Brennraumfenster 15 selbst ist praktisch kein brennbares Gemisch mehr vorhanden, die zur Bildung von Verbrennungsrückständen auf der Fensteroberfläche 15 führen können. Dieser Zweck kann am Besten dadurch erreicht werden, dass zwischen Einkoppeloptik 15 und Plasma-Funken-Ort eine kanalförmige Verengung 24 vorgesehen ist, durch die die Laserstrahlen geleitet werden. Die gezeigten Beispiele haben den Vorteil, dass die Zuströmung von frischem Gas zur Einkoppeloptik 15 verringert und das Restgas nur langsam vom frischen Gas verdrängt wird.

Vorteilhafter Weise ist die erste Vorkammer 20 so ausgeführt, dass das Brennraumfenster 15 zur Reinigung einer allfällig auftretenden Restverschmutzung zugänglich ist bzw. Funken- Vorkammer und Brennraumfenster zerlegbar sind.

## Patentansprüche

1. Vorrichtung (1) zur Zündung eines Treibstoff-Luft-Gemischs im Brennraum (4) eines Zylinders (3) einer Brennkraftmaschine (2), umfassend
g. eine erste Vorkammer (20) und eine zweite Vorkammer (30),
h. eine Wandung (21), die zwischen den beiden Vorkammern (20, 30) angeordnet ist,
i. zumindest eine Übertrittsöffnung (22) in der Wandung (21), sodass die erste und die zweite Vorkammer (20, 21) in Fluidkommunikation stehen
j. zumindest eine Austrittsöffnung (32), sodass die zweite Vorkammer (30) in Fluidkommunikation mit dem Brennraum (4) steht,
k. einen Treibstoffeinlass (18), der in die zweite Vorkammer (30) mündet sowie
l. eine Laserlichterzeugungsvorrichtung (14) mit einer Einkoppeloptik (15), welche in die erste Vorkammer (20) mündet und mit der Laserlicht (16) in die erste Vorkammer (20) einbringbar ist.

2. Vorrichtung nach Anspruch 1, **dadurch gekennzeichnet, dass** die erste Vorkammer (20) einen Zündraum (23) und einen Verbindungskanal (24) aufweist, wobei der Verbindungskanal (24) zwischen Zündraum (23) und Einkoppeloptik (15) angeordnet ist.

3. Vorrichtung nach Anspruch 2, **dadurch gekennzeichnet, dass** die Laserlichterzeugungsvorrichtung (14) und der Verbindungskanal (24) so angeordnet sind, dass der Brennpunkt (17) des Laserlichts (16) im Betriebszustand im Zündraum (23) liegt.

4. Vorrichtung nach Anspruch 2 oder Anspruch 3, **gekennzeichnet durch** einen annähernd kugelförmigen oder ellipsoiden Zündraum (23).

5. Vorrichtung nach einem der Ansprüche 2 bis 4, **dadurch gekennzeichnet, dass** der Verbindungskanal (24) einen Querschnitt aufweist, der mit steigender Entfernung von der Einkoppeloptik (15) abnimmt.

6. Vorrichtung nach einem der Ansprüche 1 bis 5, **dadurch gekennzeichnet, dass** die zweite Vorkammer (30) einen Hauptraum (33) und einen Kanal (34) aufweist, der in den Hauptraum (33) mündet.

7. Vorrichtung nach Anspruch 6, **gekennzeichnet durch** einen annähernd kugelförmigen oder ellipsoiden Hauptraum (33).

8. Vorrichtung nach Anspruch 6, **dadurch gekennzeichnet, dass** die wenigstens eine Austrittsöffnung (32) an einem Ende des Kanals (34) angeordnet ist.

9. Vorrichtung nach Anspruch 6 oder Anspruch 7, **dadurch gekennzeichnet, dass** der Kanal (34) im Einbauzustand in einem von 0° verschiedenen Winkel (αzur Hauptbewegungsrichtung(12) des Kolbens (6) im Zylinder (3) angeordnet ist.

10. Vorrichtung nach Anspruch 8, **dadurch gekennzeichnet, dass** der Winkel (α)zwischen 15° und 75°, vorzugsweise zwischen 30° und 60° beträgt.

11. Vorrichtung nach einem der Ansprüche 6 bis 9, **dadurch gekennzeichnet, dass** der Kanal (34) wenigstens abschnittsweise zylinderförmig oder konusförmig ausgebildet ist

12. Vorrichtung nach einem der Ansprüche 7 bis 11, **dadurch gekennzeichnet, dass** das Volumenverhältnis von Hauptraum (33) zu Zündraum (23) > 10:1 ist.

13. Vorrichtung nach einem der Ansprüche 1 bis 12, **dadurch gekennzeichnet, dass** die erste Vorkammer (20) zumindest zwei, vorzugsweise vier, Übertrittsöffnungen (22) aufweist.

14. Vorrichtung nach einem der Ansprüche 1 bis 13, **dadurch gekennzeichnet, dass** die wenigstens eine Übertrittsöffnung (22) derart angeordnet ist, dass sie in einer Kompressionsphase im Zylinder (3) auf der der Strömung des Fluids abgewandten Seite angeordnet ist.

15. Vorrichtung nach einem der Ansprüche 1 bis 14, **dadurch gekennzeichnet, dass** die zweite Vorkammer (30) wenigstens zwei, vorzugsweise vier, Austrittsöffnungen (32) aufweist.

16. Brennkraftmaschine (2) mit einer Vorrichtung (1) nach einem der Ansprüche 1 bis 15.

17. Verfahren zur Zündung eines Treibstoff-Luft-Gemischs im Brennraum (4) eines Zylinders (3) einer Brennkraftmaschine (2) mit einer Vorrichtung (1) nach einem der Ansprüche 1 bis 15, wobei Treibstoff in die zweite Vorkammer (30) eingelassen wird, der über die Übertrittsöffnungen (22) in die erste Vorkammer (20) übertritt und mit der Laserlichterzeugungsvorrichtung (14) gezündet wird, wobei das gezündete Treibstoff-Luft-Gemisch über die Übertrittsöffnungen (22) in die zweite Vorkammer (30) übertritt und dort Treibstoff-Luft-Gemisch entzündet, welches über die Austrittsöffnungen (32) in den Brennraum (4) übertritt und dort Treibstoff-Luft-Gemisch zündet.
